# EUROPEAN PATENT SPECIFICATION

(11) **EP 0 550 619 B1**
(45) Date of publication and mention of the grant of the patent: **27.07.1994**
(21) Application number: 91917687.5
(22) Date of filing: 23.09.1991
(51) Int. Cl.: E06B 9/08, E06B 9/64, B60J 7/10

(54) **CURTAIN ARRANGEMENT**
VORHANGVORRICHTUNG
DISPOSITIF DE RIDEAU

(30) Priority: 28.09.1990 SE 9003085
(43) Date of publication of application: 14.07.1993
(73) Proprietor: JENS ERIKSSON FÖRSÄLJNING AB, S-824 00 Hudiksvall (SE)
(72) Inventor: ERIKSSON, Jens, S-824 00 Hudiksvall (SE)
(74) Representative: Johansson, Lars E.
(86) International application number: SE9100634
(87) International publication number: WO9206268

(56) References cited:
- EP-A-01 252 17
- WO-A-89/00513
- US-A- 1 692 707
- US-A- 3 306 344

## Description

### Technical field of the invention

This invention relates to a curtain arrangement for closing an opening in for instance a building, a tent, a vehicle cover or any other arbitrary object, comprising a canvas member which at an upper edge is attachable in connection with the opening and which has a substantially horizontal rolling rod in an area substantially halfway between the upper edge and a lower edge, said rolling rod being non-rotatably connected to the canvas member in order, upon rotation, to permit winding the canvas member on the rod, a pull rope being connected to at least one of the two opposite ends of the rolling rod to effect raising and rotation of the rolling rod during winding of the associated canvas member on the rod.

### State of the art

A curtain arrangement, particularly for vehicle covers, of the type generally indicated above, is previously known from W089/00513. In this known curtain arrangement, the pull rope is endless and placed around upper and lower guide rollers and connected to the rolling rod via a sleeve allowing rotation thereof when an upwardly directed tensile force is exerted in the pull rope. To effect the required rotation of the rod when pulling the rope, a wheel, having a suitable number of teeth, e.g. four, is non-rotatably connected to the rod and engages a guide including a number of fixed tooth-like lug members suitably in the form of bearing-fitted rollers, which are arranged at mutual distances progressively increasing in the direction from a lower end position towards an upper end position of the rolling rod. By the progressively increasing distances between adjacent lug members the rolling rod, when being raised from its lower end position, is initially given a relatively high speed of rotation which thereafter decreases successively as the rolling rod is raised and the canvas member is wound on the rod. In such a way, the successively increasing diameter of the canvas member wound on the rod is compensated for, so that the canvas member is continuously held properly stretched during the winding operation.

This curtain arrangement operates in a satisfactory way particularly in vehicle covers, since these have a rather limited height. Thus, conventional vehicle covers - and so the canvas member of the curtain arrangement as well - have a total height of about 2 m, meaning that the total raising height of the rolling rod maximally is about 1 m.

However, if one wishes to give the curtain arrangement a greater height, e.g. 4 or 5 m, as usually required in the case it should be utilized as a gate, for instance in hangars, tents or other large buildings, problems arise that are difficult to master in so far as the distances between the uppermost lug members of the guide become too great to ensure flawless rotation of the rolling rod and proper winding of the canvas member on it. Another drawback of the previously known curtain arrangement is that it has to be manufactured in different designs for different heights of the canvas member, more precisely with varying distances between the lug members of the guide device. Further, the known arrangement is comparatively expensive to manufacture because it includes a large number of bearing-fitted rollers serving as lug members. These rollers also require lubrication, which might make the arrangement unsuitable for use in environments where the requirements of cleanness are high.

### The objects of the invention

The present invention aims at eliminating the disadvantages of the known curtain arrangement and providing a curtain arrangement that is reliably applicable also for great heights of the canvas member. A basic object of the invention thus is to provide a curtain arrangement whose pull rope is capable of raising the rolling rod throughout a long distance without jeopardizing proper winding of the canvas member on the rod. Another object is to provide a curtain arrangement which is easy and inexpensive to manufacture. A further object is to provide a curtain arrangement in which the elements included do not require lubrication.

### Brief description of the inventive idea

According to the invention, at least the basic objects thereof are achieved in that a second rope axially spaced apart from the pull rope is connected to the rolling rod and arranged, upon rotation and raising of the rolling rod, to exert a downwardly directed counterforce on the rolling rod so as to force the canvas member to be wound on the rod in a stretched condition, said counterforce rope being connected to means ensuring resiliency thereof in spite of the fact that said counterforce continuously acts on the counterforce rope during the combined rotating and raising movement of the rod.

The other objects and advantages are achieved by means of the curtain arrangement defined in the dependent claims.

### Brief description of the accompanying drawings

In the drawings,
- FIG. 1: is a schematic, partial perspective view of a curtain arrangement according to the invention,
- FIG. 2: is a partial vertical section showing the rope set-up of the arrangement in integrated in a gate-defining post,
- FIG. 3: is a horizontal section of the post in Fig. 1, and
- FIGS. 4 and 5: are schematic vertical sections separately showing the pull rope and the counterforce rope, respectively.

### Detailed description of a preferred embodiment of the invention

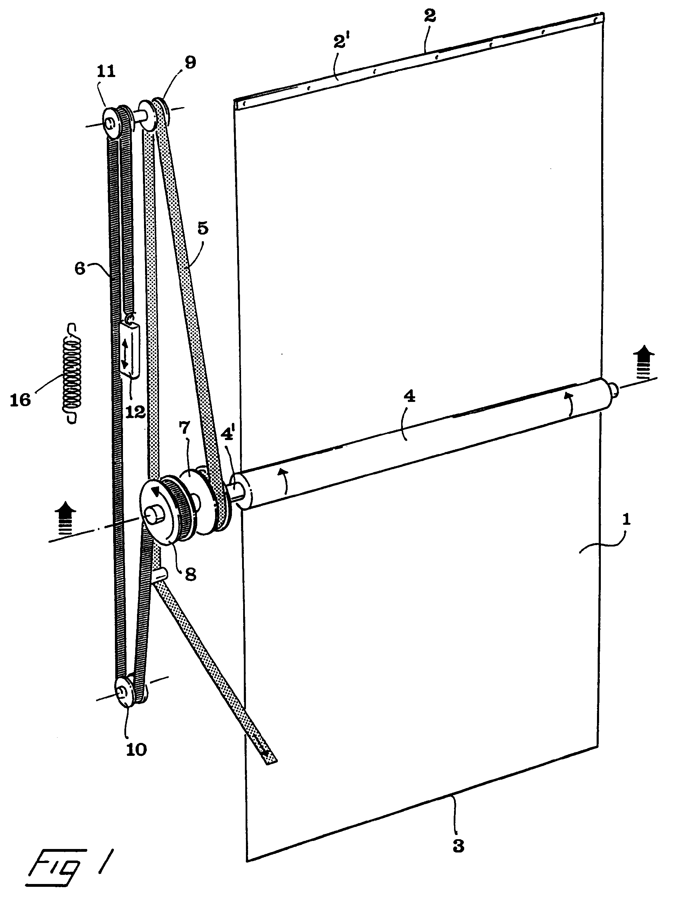

The arrangement shown in Fig. 1 comprises a canvas member, generally designated 1, having an upper edge 2 and a lower edge 3. In practice, the upper edge 2 is attached in a suitable manner at the upper part of an opening in a building, a tent, a vehicle cover or any other, arbitrary object (not shown). The upper edge of the canvas member is, for instance, suspended in hooks engaging in holes in a strip 2′ applied to the canvas member. In the area halfway between the upper and lower edges 2,3 of the canvas member, a rolling rod 4 is arranged which is non-rotatably attached to the canvas member 1 for winding the canvas member on the rod when being rotated. In practice, the rod can be made in many different ways. The rod may for instance consist of a cylindrical tube on which the canvas member is attached in a suitable manner, for instance by riveting or the like. It is also conceivable to use a rolling rod of non-circular, e.g. rectangular cross-sectional shape which is inserted in a pocket of corresponding shape formed in the canvas member, thus ensuring that the rod is unable to rotate relative to the canvas member.

A rope set-up comprising a first rope or pull rope 5 and a second rope or counterforce rope 6 is connected to at least one of the two opposite ends of the rolling rod 4. These ropes are both wound on reels or reel-like means 7 and 8, respectively, axially spaced apart on the end 4′ of the rolling rod which protrudes from the canvas member. Each such reel is defined by two side walls between which the pertaining rope can be wound. In Fig. 1 the reels 7,8 are shown spaced apart by a gap but, as shown in Fig. 2, they may be separate without any such gap, one side wall being common to both reels.

In this description, as well as in the following claims, the term "rope" has been preferred for linguistic simplicity. This term should however be interpreted in a wider sense and, in addition to ropes proper, also be considered to include other flexible, elongated members of equivalent kinds, such as bands, wires, chains, cables or the like. For the same purpose, i.e. to create linguistic simplicity, the term "canvas member" is used to designate the flexible element 1 that is wound on and unwound from the rolling rod 4. In practice, this element does not have to constitute a tight, continuous canvas member in the strict sense, but may also consist of other equivalent elements, such as nets, pieces of fabric, sheeting and the like.

The pull rope 5 in Fig. 1 is laid over at least one upper guide roller 9, a free, lower end of the rope being accessible to be gripped by a person standing on the floor or the ground adjacent the gate opening. The second rope 6 is first laid over a lower guide roller 10 and then over an upper guide roller 11. A counterweight 12 is attached to a free end of the rope, depending from the upper guide roller 11.

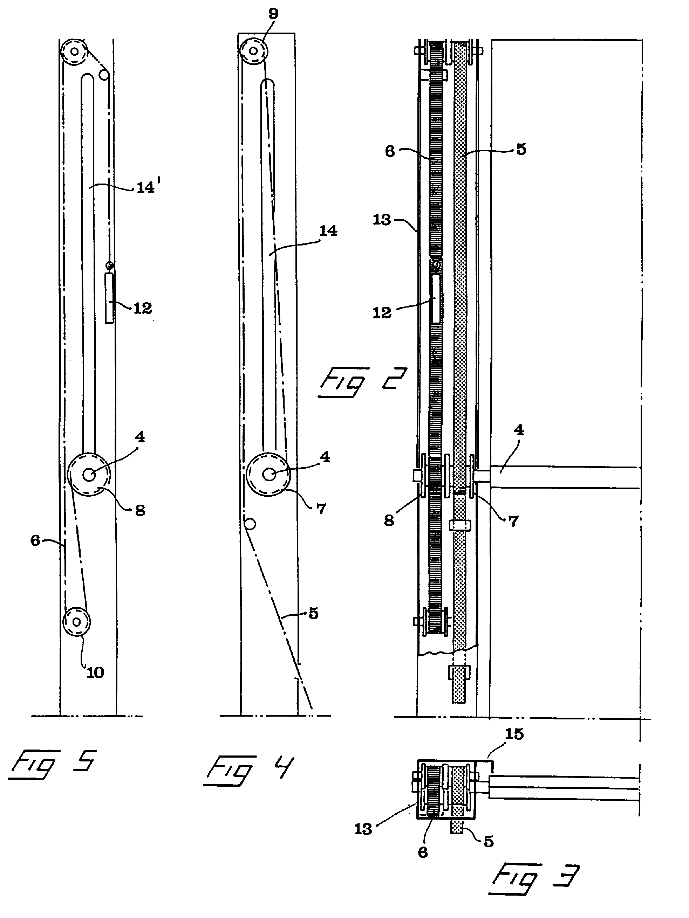

As is evident from Figs. 2-5, the rope set-up, schematically illustrated in Fig. 1, may be integrated in a post-like box structure 13 which is disposed in connection with a gate opening or defines the gate opening. The rolling rod 4 may, but need not necessarily, be guided in slots 14,14′ provided in side walls of this post structure. On the outer wall of the post stucture 12 a protruding flange portion 15 may be applied which covers or overlaps the edge portion of the canvas member 1.

The depicted device operates as follows.

Fig. 1 shows a starting or initial position in which the rolling rod is in a lower end position where the canvas member 1 is fully unwound and covers the gate opening in question. In this state, the two ropes 5,6, which are wound in one and the same direction on the respective reels 7,8, are fully or maximally wound on the reels. Owing to the fact that the ropes are wound in the same direction and, the pull rope, on one hand, is drawn out in the upward direction on one side of the rod while, on the other hand, the counterforce rope 6 is drawn out in the downward direction on the opposite side of the rod, the pull rope will be paid out from its reel simultaneously as the counterforce rope is also paid out or unwound from the pertaining reel. When a tensile force is applied to the pull rope 5, the rod 4 is rotated while being raised in the vertical, upward direction from its initial position, the canvas member being at hte same time wound on the rod. In their initial position the two rolls of rope on the reels have a diameter that is larger than the diameter of the rod. This means that the counterforce rope is unwound from its reel at a peripheral speed that is higher than the speed at which the rolling rod is raised, meaning that the counterweight 12, during the initial phase of the raising movement, is lowered in relation to its starting position. Gradually as the rod is raised and the counterforce rope is paid out from its reel, the diameter of the rope roll however decreases to a point where the linear raising velocity of the rolling rod exceeds the peripheral pay-out velocity of the counterforce rope. At this point the counterweight starts being raised instead of lowered. Throughout the entire raising operation from the lower end position to the upper end position of the rolling rod 4, the counterweight 12 via the rope 6 exerts on the rod 4 a downwardly directed counterforce that continuously forces the canvas member to be wound on the rod in a stretched condition. This counterforce is of a resilient nature, the counterweight is suspended freely movable. This means that the counterforce in every phase of the raising movement affects the rolling rod by a counterforce of uniform size, balancing the tensile force in the pull rope 5.

Instead of a counterweight it is conceivable to use other means to ensure the resiliency of the counterforce rope. In Fig. 1 is thus illustrated how a spring, e.g. of the type helical tension spring 16, can replace the counterweight 12. This spring then is applied with one en at the free end of the counterforce rope and with its opposite end in a stationary attachment at a suitable location. It is also conceivable to completely or partly make the counterforce rope 6 out of an elastic material, which at least contributes to said resiliency of the rope upon counterforce loading on the rolling rod.

Practical tests have shown that the described rope set-up operates very satisfactorily also with extremely large curtain canvases. Thus, the canvas member may have a height of 4-6 m and a length of 10-15 m and can be wound on the rod under proper stretching even when utilizing only a single pull rope and counterforce rope combination arranged at one end of the rolling rod.

Although the inventive arrangement in itself is especially well suited for use with large curtain canvases, it may in practice also be applied to canvas members and openings of a smaller size than hangar gates and the like. The depicted arrangement may thus also be used for vehicle covers.

## Claims

1. A curtain arrangement for closing an opening in for instance a building, a tent, a vehicle cover or any other, arbitrary object, comprising a canvas member (1) which at an upper edge (2) is attachable in connection with the opening and which has a substantially horizontal rolling rod (4) in an area substantially halfway between the upper edge and a lower edge (3), said rolling rod (4) being non-rotatably connected to the canvas member in order, upon rotation, to permit winding the canvas member on the rod, a pull rope (5) being connected to at least one of the two opposite ends of the rolling rod to effect raising and rotation of the rolling rod, **characterized** in that a second rope (6) axially spaced apart from the pull rope (5) is connected to the rolling rod (4) and arranged, upon rotation and raising of the rolling rod, to exert a downwardly directed counterforce on the rolling rod so as to force the canvas member to be wound on the rod in a stretched condition, said counterforce rope (6) being connected to means (12,14) ensuring resiliency thereof in spite of the fact that said counterforce continuously acts on the counterforce rope during the combined rotating and raising movement of the rod.

2. A curtain arrangement as claimed in claim 1, **characterized** in that said means is a counterweight (12) attached to the counterforce rope or a part connected thereto.

3. A curtain arrangement as claimed in claim 1, **characterized** in that said means is a spring, e.g. a helical tension spring (14), attached to the counterforce rope.

4. A curtain arrangement as claimed in any of the preceding claims, **characterized** in that the counterforce rope (6) is completely or partly made of a resilient material that at least contributes to the resiliency of the rope when the counterforce is applied to the rolling rod.

5. A curtain arrangement as claimed in any one of the preceding claims, **characterized** in that the two ropes (5,6) are wound on two adjacent, though axially spaced reels or reel-like devices (7,8) on the rolling rod (4).

6. A curtain arrangement as claimed in claim 5, **characterized** in that the two ropes (5,6) are wound in one and the same direction on the respective reels (7,8) in order, on paying out or unwinding the pull rope by pulling therein, to also effect paying-out or unwinding of the counterforce rope.

7. A curtain arrangement as claimed in claim 6, **characterized** in that the two ropes (5,6), in a starting or initial position in which the rolling rod is in a lower end position and the canvas member (1) covers the associated opening, are fully or maximally wound on the reels (7,8), then having a diameter that is greater than the diameter or the largest cross-sectional dimension of the rod, the diameter of the counterforce rope (6) being so chosen, in relation to the maximal raising height of the rolling rod (4), that the end of this rope in a first phase of the raising operation, is paid out to be subsequently pulled back or wound in in a later phase in which the winding diameter of the rope has been reduced, while ensuring a minimal path of travel of the counterweight (12) and/or the spring (14).

## Patentansprüche

1. Vorhangvorrichtung zum Verschliessen einer Öffnung beispielsweise in einem Gebäude, Zelt, Fahrzeugverdeck oder irgendeinem anderen beliebigen Gegenstand, umfassend ein Segeltuch (1), dessen obere Kante (2) an der Öffnung befestigbar ist und das in einem Bereich hauptsächlich in der Mitte zwischen der oberen Kante und einer unteren Kante (3) eine im wesentlichen horizontale Aufrollstange (4) aufweist, welche mit dem Segeltuch drehfest verbunden ist, um beim Drehen das Aufwickeln des Segeltuchs auf die Stange zu gestatten, wobei ein Zugseil (5) mit zumindest einem der beiden entgegengesetzten Enden der Aufrollstange verbunden ist, um das Heben und Drehen der Aufrollstange zu bewirken, dadurch **gekennzeichnet**, dass ein zweites Seil (6), das sich in axialer Richtung im Abstand vom Zugseil (5) befindet, mit der Aufrollstange (4) verbunden und angeordnet ist, beim Drehen und Heben der Aufrollstange eine nach unten gerichtete Gegenkraft auf die Aufrollstange auszuüben, um das Aufwickeln des Segeltuchs auf die Stange im gestreckten Zustand zu erzwingen, wobei das Gegenkraft ausübende Seil (6) mit einem Mittel (12, 14) verbunden ist, das dessen Federungsvermögen sicherstellt, obwohl die Gegenkraft während der kombinierten Dreh- und Hubbewegung der Stange kontinuierlich auf das Gegenkraft ausübende Seil einwirkt.

2. Vorhangvorrichtung nach Anspruch 1, dadurch **gekennzeichnet**, dass das genannte Mittel ein an dem Gegenkraft ausübenden Seil oder an einem damit verbundenen Teil befestigtes Gegengewicht (12) ist.

3. Vorhangvorrichtung nach Anspruch 1, dadurch **gekennzeichnet**, dass das genannte Mittel eine Feder, beispielsweise eine spiralförmige Spannfeder (14) ist, die an dem Gegenkraft ausübenden Seil befestigt ist.

4. Vorhangvorrichtung nach einem der vorhergehenden Ansprüche, dadurch **gekennzeichnet**, dass das Gegenkraft ausübende Seil (6) ganz oder teilweise aus einem elastischen Material hergestellt ist, das wenigstens das Federungsvermögen des Seils fördert, wenn die Gegenkraft auf die Aufrollstange aufgebracht wird.

5. Vorhangvorrichtung nach einem der vorhergehenden Ansprüche, dadurch **gekennzeichnet**, dass die beiden Seile (5, 6) auf zwei benachbarte, jedoch in axialer Richtung im Abstand voneinander angeordnete Haspeln oder haspelförmige Einrichtungen (7, 8) an der Aufrollstange (4) gewickelt sind.

6. Vorhangvorrichtung nach Anspruch 5, dadurch **gekennzeichnet**, dass die beiden Seile (5, 6) in einer und derselben Richtung auf die jeweilige Haspel (7, 8) gewickelt sind, um beim Abrollen oder Abwickeln des Zugseils durch Ziehen auch das Abrollen oder Abwickeln des Gegenkraft ausübenden Seils zu bewirken.

7. Vorhangvorrichtung nach Anspruch 6, dadurch **gekennzeichnet**, dass die beiden Seile (5, 6) in einer Ausgangsposition, in welcher sich die Aufrollstange in einer unteren Endposition befindet und das Segeltuch (1) die Öffnung abdeckt, ganz oder maximal auf die Haspeln (7, 8) aufgewickelt sind, wobei die Haspeln einen Durchmesser haben, der grösser ist als der Durchmesser oder die grösste Querschnittsabmessung der Stange, wobei der Durchmesser des Gegenkraft ausübenden Seils (6) im Verhältnis zu der maximalen Hubhöhe der Aufrollstange (4) so gewählt ist, dass das Ende dieses Seils in einer ersten Phase des Hubvorgangs abgerollt wird, um danach in einer späteren Phase, in welcher der Aufwickeldurchmesser des Seils verkleinert worden ist, zurückgerollt oder aufgewickelt zu werden, während eine Mindestbewegungsbahn des Gleichgewichts (12) und/oder der Feder (14) gewährleistet ist.

## Revendications

1. Dispositif de rideau destiné à fermer une ouverture dans un batiment, une tente, une couverture de véhicule ou analogue, comprenant un élément en toile (1) qui, à un bord supérieur (2), peut être attaché adjacent à ladite ouverture et qui est muni d'un rouleau (4) sensiblement horizontal environ à mi-chemin entre le bord supérieur (2) et le bord inférieur (3), ledit rouleau (4) étant solidaire en rotation de l'élément en toile pour permettre à ce dernier de s'enrouler autour du rouleau lors de sa rotation, un cordon de tirage (5) étant relié à l'une au moins des deux extrémités opposées du rouleau afin de faire tourner et lever ce dernier, **caractérisé** en ce qu'un cordon supplémentaire (6), écarté en sens axial du cordon de tirage (5), est relié audit rouleau (4) et prévu, lors de la rotation et du levage de celui-ci, pour appliquer au rouleau une force antagoniste dirigée vers le bas, de manière à contraindre l'élément en toile à s'enrouler autour du rouleau de façon tendue, ledit cordon supplémentaire (6) étant relié à un moyen (12; 14) assurant son élasticité malgré que ladite force antagoniste agisse de façon continue sur le cordon supplémentaire pendant le mouvement de rotation et de levage combiné dudit rouleau.

2. Dispositif de rideau selon la revendication 1, **caractérisé** en ce que ledit moyen est un contrepoids (12) attaché au cordon supplémentaire ou à un élément y relié.

3. Dispositif de rideau selon la revendication 1, **caractérisé** en ce que ledit moyen est un ressort, tel qu'un ressort de rappel hélicoïdal (14), attaché au cordon supplémentaire.

4. Dispositif de rideau selon l'une quelconque des revendications précédentes, **caractérisé** en ce que le cordon supplémentaire (6) est fait, entièrement ou en partie, d'un matériau élastique, au moins contribuant à l'élasticité du cordon lors de l'application de ladite force antagoniste au rouleau.

5. Dispositif de rideau selon l'une quelconque des revendications précédentes, **caractérisé** en ce que les deux cordons (5, 6) sont enroulés autour de deux bobines (7, 8) ou analogues qui sont prévues sur le rouleau (4), contiguës l'une à l'autre bien qu'espacées en sens axial.

6. Dispositif de rideau selon la revendication 5, **caractérisé** en ce que les deux cordons (5, 6) sont enroulés dans le même sens autour des bobines (7, 8) respectives de façon que le cordon supplémentaire soit également déroulé ou débobiné lorsque l'on tire le cordon de tirage en vue de son déroulage ou de son débobinage.

7. Dispositif de rideau selon la revendication 6, **caractérisé** en ce que les deux cordons (5, 6), dans une position de départ dans laquelle le rouleau se trouve dans une position extrême inférieure et l'élément en toile (1) couvre ladite ouverture, sont enroulés entièrement ou au maximum autour des bobines (7, 8), présentant alors un diamètre qui est supérieur au diamètre ou à la dimension de coupe transversale maximale du rouleau, le diamètre du cordon supplémentaire (6) étant tel que, par rapport au niveau de levage maximal du rouleau (4), l'extrémité du cordon supplémentaire est déroulée, dans une première étape du levage, pour être par la suite rappelée ou enroulée dans une étape ultérieure pendant laquelle le diamètre d'enroulement du cordon a été réduit, tout en assurant une trajectoire minimale du contrepoids (12) et/ou du ressort (14).
